# EUROPEAN PATENT SPECIFICATION

(11) **EP 2 375 157 B1**
(45) Date of publication and mention of the grant of the patent: **14.09.2016**
(21) Application number: 11160121.7
(22) Date of filing: 29.03.2011
(51) Int. Cl.: F23N 5/02, F23N 5/10, F23N 5/24, G01K 15/00

(54) **Combustion controlling device**
Verbrennungssteuervorrichtung
Dispositif de contrôle de combustion

(30) Priority: 30.03.2010 JP 2010077237
(43) Date of publication of application: 12.10.2011
(73) Proprietor: Azbil Corporation, Chiyoda-ku Tokyo 100-6419 (JP)
(72) Inventor: Yamada, Akira, Tokyo 100-6419 (JP); Kumazawa, Yuuichi, Tokyo 100-6419 (JP); Nakata, Tomoya, Tokyo 100-6419 (JP); Morikawa, Katsumi, Tokyo 100-6419 (JP)
(74) Representative: Lavoix

(56) References cited:
- JP-A- 9 257 372
- JP-A- 60 011 018
- US-A- 5 496 450
- US-A- 5 653 180
- US-A- 5 663 899

## Description

### Field of Technology

The present invention relates to a controlling device for controlling combustion in a combustion furnace.

### Background of the Invention

US 5,663,899 discloses a temperature sensing system contains a plurality of thermocouple pairs which are connected to an interface. The interface contains a microprocessor and a memory and provides for fault tolerance within the system by comparing measurements from each thermocouple within a thermocouple pair to a predetermined threshold value. If the difference between the thermocouple readings is greater than the threshold value, a malfunction is identified and corrective action is taken.

US 5,653,180 concerns a furnace for incinerating waste material. The waste material in the gasification furnace is determined as having been ignited when the temperature of a combustible gas in the combustion furnace is detected by a temperature sensor as having reached a temperature at which the combustible gas is capable of spontaneous combustion within a predetermined time period after an igniting nozzle stops supplying combustion flames to the waste material in the gasification furnace. If the waste material is not determined as having been ignited, then the igniting nozzle is controlled to supply combustion flames again to the waste material in the gasification furnace.

JP 60-011018 A concerns a combustion control of a side burner in a direct firing type heating furnace having a plurality of temperature sensors.

Typically, in an industrial combustion furnace, the pre-purge, ignition burner, and main burner are monitored at the time of startup. If the temperature within the furnace is detected as being greater than the ignition point (normally 760°C), then, regardless of the actual state of combustion, it is viewed automatically as having been ignited, obviating the need for monitoring the pre-purge, the ignition burner, and the main burner. Given this, conventionally a temperature regulator has been provided that compares a measurement result by a temperature sensor to a specific temperature, to output the result, where the control of the pre-purge and the burners has been performed based on the comparison result by the temperature regulator (See, for example, Japanese Unexamined Patent Application Publication H09-257372). Specifically, the temperature regulator would measure the temperature within the combustion furnace using a temperature sensor, and compare the measurement result to the ignition temperature of 760°C, and then would output a signal if the measurement result is in excess of 760°C. When this signal is inputted by the combustion furnace controlling device, the controlling device would not monitor the pre-purge, the ignition burner, and the main burner at the time of startup.

However, when a fault occurs in the temperature sensor or in the temperature regulator, then a signal might be outputted indicating incorrectly that the temperature is in excess of the ignition point, regardless of the furnace temperature within the combustion furnace being less than the ignition point. In such a case, the fuel that is supplied into the furnace could accumulate within the furnace, without combustion, with the risk of causing abnormal combustion.

Given this, the object of the present invention is to provide a combustion furnace controlling device able to control the combustion furnace more safely.

### Summary of the Invention

In order to solve the problem set forth above, a combustion furnace controlling device according to claim 1 is provided.

In the combustion furnace controlling device, the controlling portion may comprise a diagnosing portion for diagnosing whether or not a fault has occurred in the first temperature monitoring portion or the second temperature monitoring portion in accordance with whether or not there is switching between outputting and stopping the first signal or the second signal when a switching signal, for switching between outputting or stopping the first signal or the second signal, is outputted to the first temperature monitoring portion and/or the second temperature monitoring portion.

Here the diagnosing portion may diagnose that a fault has occurred in the first temperature monitoring portion or the second temperature monitoring portion to which the switching signal was outputted if a specific time interval has elapsed from the point in time that the switching signal was outputted until the point in time wherein the first signal or second signal switches between being outputted and being stopped.

Furthermore, the control portion may stop the operation of the furnace when there has been a diagnosis, by the diagnosing portion, that a fault has occurred in the first temperature monitoring portion or the second temperature monitoring portion.

The present invention enables safe control of a combustion furnace, even when there is a fault in one of the temperature monitoring portions, through the provision of two temperature monitoring portions and through controlling the combustion of the combustion furnace based on signals outputted therefrom.

### Brief Description of the Drawings

FIG. 1 is a schematic diagram illustrating schematically a combustion controlling device according to the present invention.
FIG. 2 is a timing chart for explaining the operation of the combustion controlling device according to the present invention.

### Detailed Description of the Invention

An example according to the present invention will be explained in detail below in reference to the drawings.

### Structure of the Combustion Control System

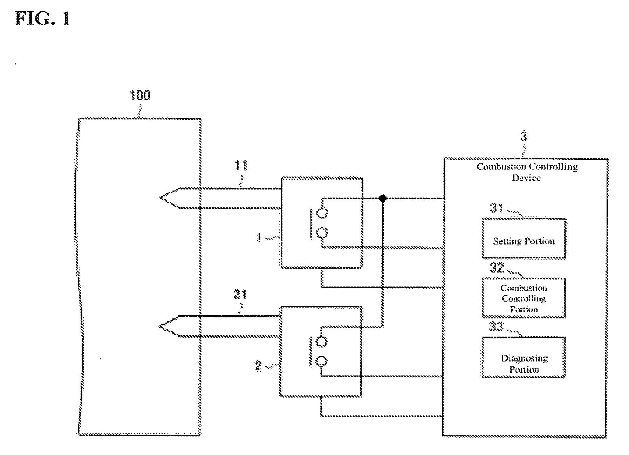

As illustrated in FIG. 1, a combustion control system according to an example include a first temperature regulator 1; a second temperature regulator 2 having a structure identical to that of the first temperature regulator 1; and a combustion controlling device 3 that not only controls the combustion within a furnace 100 through exchanging signals with the first temperature regulator 1 and the second temperature regulator 2, but also diagnoses faults in the first temperature regulator 1 and the second temperature regulator 2.

The first temperature controller 1 is structured from a well-known temperature controller connected to a first temperature sensor 11 provided at a specific position within the furnace 100. This type of first temperature controller 1 compares a temperature within the furnace 100, measured by the first temperature sensor 11 (hereinafter termed the "measured temperature") with a temperature setting value (for example 760°C) that is set in advance, which is the ignition point temperature, and, if the measured temperature is greater than 760°C, outputs, to a combustion controlling device 3 a signal indicating such (hereinafter termed "the first signal"). Moreover, when a signal (hereinafter termed the "first switching signal") indicating switching of the output of the first signal is inputted from the fuel combustion controlling device 3 when the first signal is outputted, then the first temperature controller 1 stops outputting the first signal.

The second temperature controller 2 is structured from a well-known temperature controller connected to a first temperature sensor 21 provided at a specific position within the furnace 100. This type of second temperature controller 2 compares measured temperature by the second temperature sensor 21 with a temperature setting value (for example 760°C) that is set in advance, which is the ignition point temperature, and, if the measured temperature is greater than 760°C, outputs, to a combustion controlling device 3 a signal indicating such (hereinafter termed "the second signal"). Moreover, when a signal (hereinafter termed the "second switching signal") indicating switching of the output of the second signal is inputted from the combustion controlling device 3 when the second signal is outputted, then the second temperature controller 2 stops outputting the second signal.

Here the first temperature sensor 11 and the second temperature sensor 21 are disposed in mutually different locations such that each can detect the identical temperature within the furnace 100.

The combustion controlling device 3 is provided with a setting portion 31 for setting a specific operating mode based on the first signal and the second signal, a combustion controlling portion 32 for controlling the various operations of the furnace 100 based on the operating mode set by the setting portion 31, and a diagnosing portion 33 for diagnosing whether or not the first temperature controller 1 and the second temperature controller 2 are operating properly. This type of combustion controlling device 3 comprises a microprocessor, such as a CPU, and the peripheral circuitry, and, through reading in and executing a program that is stored in a control memory, the hardware and the operating program work in conjunction to embody the setting portion 31, the combustion controlling portion 32, and the diagnosing portion 33.

Here the setting portion 31, when both the first signal and the second signal are inputted, sets the 760°C mode. On the other hand, if either one of the signals from first temperature controller 1 or second temperature controller 2 is not inputted, then the normal mode is set. Information regarding the 760°C mode or the normal mode that has been set is inputted into the combustion controlling portion 32 and into the diagnosing portion 33.

The combustion controlling portion 32 controls the state of combustion within the furnace 100, such as the ignition, extinguishment, pre-purge, temperature control, and the like, for the furnace 100. While this type of combustion controlling portion 32 normally, for example, monitors the pre-purge, ignition burner, main burner, and the like, at the time of startup, when this type of 760°C mode is set by the setting portion 31, the operations that can be omitted when the temperature within the furnace 100 is higher than 760°C are skipped. Other hand, when the normal mode is set by the setting portion 31, the combustion controlling portion 32 performs operations that are not performed when in the 760°C mode, such as, as mentioned above, monitoring the pre-purge, the ignition burner, and the main burner at startup, and the like.

The diagnosing portion 33, at specific time intervals, performs diagnoses as to whether or not the first temperature controller 1 and the second temperature controller 2 are operating properly.

### Diagnostic Function

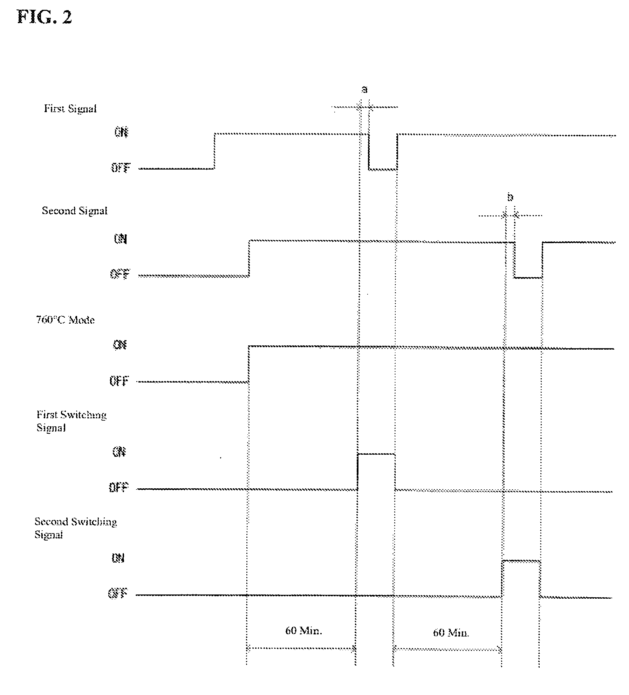

The diagnostic operation by the diagnosing portion 33 of the combustion controlling device 3 will be explained next in reference to FIG. 2.

When the first signal is inputted from the first temperature controller 1 (first signal: ON) and the second signal is inputted from the second temperature controller 2 (second signal: ON), then the setting portion sets the 760°C mode (760°C: ON).

When a specific time interval (for example, 60 min) has elapsed since the 760°C mode was set, then the diagnosing portion 33 diagnoses whether or not the first temperature controller 1 or the second temperature controller 2 is operating properly. Note that while in the below example is explained for a diagnosis starting with the first temperature controller 1, the diagnosis may be from the second temperature controller 2, or both the first temperature controller 1 and the second temperature controller 2 maybe examined simultaneously.

First the diagnosing portion 33 outputs the first switching signal to the first temperature controller 1 (first switching signal: ON). When the first temperature controller 1 inputs the first switching signal, the outputting of the first signal is stopped. Given this, the diagnosing portion 33 checks whether or not the time for switching between the first signal being outputted and being stopped, from the point in time wherein the first switching signal was outputted, that is, the time until the input of the first signal is stopped, is within a specific amount of time (for example, 10 seconds). That is, it checks whether or not the time indicated by the code a in FIG. 2 is within 10 seconds.

If the inputting of the first signal is not stopped within 10 seconds from the outputting of the first switching signal, then the diagnosing portion 33 concludes that a fault has occurred in the first temperature controller 1. If there is a diagnosis by the diagnosing portion 33 in this way that a fault has occurred, then the combustion controlling portion 32 cuts off the supply of fuel to the furnace 100. This makes it possible to prevent the occurrence of abnormal combustion, because the furnace 100 is locked out, even if there is a fault in the first temperature controller 1.

On the other hand, if the inputting of the first signal is stopped within 10 seconds of the outputting of the first switching signal, then the diagnosing portion 33 diagnoses that the first temperature controller 1 is operating properly. Note that while this diagnosis operation is being performed by the diagnosing portion 33, the setting portion 31 does not clear the setting of the 760°C mode even if the input of the first signal or the second signal is stopped. This makes it possible to perform the operation of the furnace 100 normally even during the diagnosing operation by the diagnosing portion 33.

In this way, when there is a diagnosis that the first temperature controller 1 is operating properly, then the diagnosing portion 33, after a specific amount of time (for example, 60 min.) has elapsed after stopping the output of the first switching signal (first switching signal: OFF), outputs the second switching signal to the second temperature controller 2 (second switching signal: ON). In this case as well, the diagnosing portion 33 checks whether or not the time for switching between the second signal being outputted until the input of the second signal is stopped is within a specific amount of time (for example, 10 seconds). That is, it checks whether or not the time indicated by the code b in FIG. 2 is within 10 seconds.

If the inputting of the second signal is not stopped within 10 seconds from the outputting of the second switching signal, then the diagnosing portion 33 concludes that a fault has occurred in the second temperature controller 2. If there is a diagnosis by the diagnosing portion 33 in this way that a fault has occurred, then the combustion controlling portion 32 cuts off the supply of fuel to the furnace 100.

On the other hand, the inputting of the second signal is stopped within 10 seconds from the outputting of the second switching signal, then the diagnosing portion 33 concludes that the second temperature controller 2 is operating properly. In this way, if there is a diagnosis that the second temperature controller 2 is operating properly, then the diagnosing portion 33 stops the outputting of the second switching signal (second switching signal: OFF), and then each time a specific amount of time elapses, the diagnosing portion 33 alternatingly performs the diagnosing operation, described above, on first temperature controller 1 and second temperature controller 2. In this way, with each specific amount of time, the first temperature controller 1 and the second temperature controller 2 are subjected to diagnostics, making it possible to take countermeasures promptly if a failure occurs.

As explained above, in the present invention, two temperature controllers, the first temperature controller 1 and the second temperature controller 2, are provided in the present example, and the combustion of the furnace 100 is controlled based on the first signal and the second signal outputted therefrom, thus enabling safe control of the furnace 100 even when there is a fault in one of the temperature controllers.

Note that while in the present example a case was explained as an example wherein a first switching signal or a second switching signal was outputted when the first signal or the second signal was outputted, instead the first switching signal or the second switching signal may be outputted when the first signal or the second signal is not outputted. In this case, the diagnosing portion 33 will diagnose that the first temperature controller 1 or the second temperature controller 2, to which the first switching signal or the second switching signal was outputted, is operating properly if the time between the time at which the first switching signal or the second switching signal was outputted and the time at which the first signal or the second signal is inputted is within the specific amount of time.

Moreover, while in the present example the explanation was for a case of diagnosing whether or not the first temperature controller 1 or the second temperature controller 2 was operating properly based on the time from the point in time of the outputting of the first switching signal or the second switching signal until the time at which the inputting or stopping of the first signal or the second signal was detected, the timing of the diagnoses are not limited to the case set forth above, but rather may be set as appropriate. For example, the diagnosis may be based on the time from the point in time of the stopping of the output of the first switching signal or the second switching signal until the inputting or the stopping of the first signal or the second signal. Conversely, the diagnosis may be through a comparison of the time over which the outputting of the first switching signal or the second switching signal continues and the time over which the outputting or stopping of the first signal or second signal continues.

Additionally, the layout relationship between the first temperature controller 1, the second temperature controller 2, and the combustion controlling device 3 may be set freely as appropriate. For example, they may be disposed within the same case, or they may be disposed remotely, either wired or wirelessly.

Additionally, a case was explained as an example wherein the setting value was the 760°C that is the ignition temperature, the setting value is not limited to 760°C if it is the ignition temperature, but rather can be set freely as appropriate in accordance with the environment and the fuel.

The present invention can be applied to a variety of devices wherein the operating state is controlled based on a specif threshold value.

## Claims

1. A combustion furnace controlling device (3) comprising:
a first temperature monitoring portion (1,11) configured for measuring a temperature within a combustion furnace (100), comparing that temperature to an ignition point temperature, and outputting a first signal in accordance with the comparison result;
a second temperature monitoring portion (2,21) configured for measuring a temperature within a combustion furnace (100), comparing that temperature to an ignition point temperature, and outputting a second signal in accordance with the comparison result; and
a controlling portion (32) configured for controlling the combustion of the combustion furnace (100) based on the inputted first signal and second signal,
wherein the first temperature monitoring portion outputs a first signal if the temperature within the combustion furnace (100) is greater than an ignition point temperature;
the second temperature monitoring portion outputs a second signal if the temperature within the furnace (100) is greater than an ignition temperature; **characterised in that**
the controlling portion is configured to eliminate the processes at startup to ignite a combustion burner in the furnace (100) if both the first signal and the second signal are inputted.

2. A combustion furnace controlling device as set forth in Claim 1, wherein the controlling portion comprises:
a diagnosing portion (33) diagnosing whether or not a fault has occurred in the first temperature monitoring portion (1,11) or the second temperature monitoring portion (2,21) in accordance with whether or not there is switching between outputting and stopping the first signal or the second signal when a switching signal, switching between outputting or stopping the first signal or the second signal, is outputted to at least one of the first temperature monitoring portion and the second temperature monitoring portion.

3. A combustion furnace controlling device as set forth in Claim 2, wherein:
the diagnosing portion (33) diagnoses that a fault has occurred in the first temperature monitoring portion or the second temperature monitoring portion to which the switching signal was outputted if a specific time interval has elapsed from the point in time that the switching signal was outputted until the point in time wherein the first signal or the second signal switches between being outputted and being stopped.

4. A combustion furnace controlling device as set forth in Claim 2, wherein:
the controlling portion (32) is configured to stop the operation of the combustion furnace (100) when there has been a diagnosis, by the diagnosing portion, that a fault has occurred in the first temperature monitoring portion or the second temperature monitoring portion.

## Patentansprüche

1. Verbrennungsofensteuereinheit (3), die umfasst:
einen ersten Temperaturüberwachungsabschnitt (1, 11), der so konfiguriert ist, dass er eine Temperatur innerhalb eines Verbrennungsofens (100) misst, diese Temperatur mit einer Zündpunkttemperatur vergleicht und ein erstes Signal gemäß dem Vergleichsergebnis ausgibt;
einen zweiten Temperaturüberwachungsabschnitt (2, 21), der so konfiguriert ist, dass er eine Temperatur innerhalb eines Verbrennungsofens (100) misst, diese Temperatur mit einer Zündpunkttemperatur vergleicht und ein zweites Signal gemäß dem Vergleichsergebnis ausgibt; und
einen Steuerabschnitt (32), der so konfiguriert ist, dass er die Verbrennung des Verbrennungsofens (100) auf Basis des eingegangenen ersten Signals und zweiten Signals steuert,
wobei der erste Temperaturüberwachungsabschnitt ein erstes Signal ausgibt, wenn die Temperatur innerhalb des Verbrennungsofens (100) höher als eine Zündpunkttemperatur ist;
wobei der zweite Temperaturüberwachungsabschnitt ein zweites Signal ausgibt, wenn die Temperatur innerhalb des Verbrennungsofens (100) höher als eine Zündpunkttemperatur ist; **dadurch gekennzeichnet, dass**
der Steuerabschnitt so konfiguriert ist, dass er die Prozesse beim Starten zum Zünden eines Verbrennungsbrenners im Ofen (100) eliminiert, wenn sowohl das erste Signal als auch das zweite Signal eingeht.

2. Verbrennungsofensteuereinheit nach Anspruch 1, wobei der Steuerabschnitt umfasst:
einen Diagnoseabschnitt (33), der diagnostiziert, ob ein Fehler im ersten Temperaturüberwachungsabschnitt (1, 11) oder im zweiten Temperaturüberwachungsabschnitt (2, 21) aufgetreten ist, gemäß dem, ob eine Umschalten zwischen Ausgeben und Stoppen des ersten Signals oder des zweiten Signals erfolgt, wenn ein Schaltsignal, das zwischen Ausgeben oder Stoppen des ersten Signals oder des zweiten Signals schaltet, an zumindest eines des ersten Temperaturüberwachungsabschnitt und des zweiten Temperaturüberwachungsabschnitts ausgegeben wird.

3. Verbrennungsofensteuereinheit nach Anspruch 2, wobei:
der Diagnoseabschnitt (33) diagnostiziert, dass ein Fehler im ersten Temperaturüberwachungsabschnitt oder im zweiten Temperaturüberwachungsabschnitt, an den das Schaltsignal ausgegeben wurde, aufgetreten ist, wenn ein spezifisches Zeitintervall vom Zeitpunkt der Ausgabe des Schaltsignals bis zum Zeitpunkt, an dem das erste Signal oder das zweite Signal zwischen ausgegeben werden und gestoppt werden umschaltet, vergangen ist.

4. Verbrennungsofensteuereinheit nach Anspruch 2, wobei:
der Steuerabschnitt (32) so konfiguriert ist, dass er den Betrieb des Verbrennungsofens (100) stoppt, wenn der Diagnoseabschnitt diagnostiziert hat, dass ein Fehler im ersten Temperaturüberwachungsabschnitt oder im zweiten Temperaturüberwachungsabschnitt aufgetreten ist.

## Revendications

1. Dispositif de contrôle de four à combustion (3), comprenant :
une première partie de surveillance de température (1, 11) configurée pour mesurer une température à l'intérieur d'un four à combustion (100), comparer cette température à une température de point d'inflammation et délivrer en sortie un premier signal en fonction du résultat de la comparaison ;
une seconde partie de surveillance de température (2, 21) configurée pour mesurer une température à l'intérieur d'un four à combustion (100), comparer cette température à une température de point d'inflammation et délivrer en sortie un second signal en fonction du résultat de la comparaison ; et
une partie de contrôle (32) configurée pour contrôler la combustion du four à combustion (100) sur la base du premier signal et du second signal reçus en entrée,
dans lequel la première partie de surveillance de température délivre en sortie un premier signal si la température à l'intérieur du four à combustion (100) est supérieure à une température de point d'inflammation ;
la seconde partie de surveillance de température délivre en sortie un second signal si la température à l'intérieur du four à combustion (100) est supérieure à une température de point d'inflammation ;
**caractérisé en ce que** la partie de contrôle est configurée pour éliminer les processus au démarrage pour allumer un brûleur de combustion dans le four (100) si le premier signal et le second signal sous tous les deux reçus en entrée.

2. Dispositif de contrôle de four à combustion selon la revendication 1, dans lequel la partie de contrôle comprend :
une partie de diagnostic (33) pouvant diagnostiquer si une anomalie s'est produite ou non dans la première partie de surveillance de température (1, 11) ou dans la seconde partie de surveillance de température (2, 21) selon qu'il y a ou non une commutation entre la délivrance et l'interruption du premier signal ou du second signal quand un signal de commutation, basculant entre la délivrance et l'interruption du premier signal ou du second signal, est envoyé au moins à l'une des parties parmi la première partie de surveillance de température et la seconde partie de surveillance de température.

3. Dispositif de contrôle de four à combustion selon la revendication 2, dans lequel :
la partie de diagnostic (33) diagnostique qu'une anomalie s'est produite dans la première partie de surveillance de température ou dans la seconde partie de surveillance de température vers laquelle le signal de commutation a été envoyé si un intervalle de temps spécifique s'est écoulé depuis le moment où le signal de commutation a été envoyé jusqu'au moment où le premier signal ou le second signal bascule entre son émission et son interruption.

4. Dispositif de contrôle de four à combustion selon la revendication 2, dans lequel :
la partie de contrôle (32) est configurée pour interrompre le fonctionnement du four à combustion (100) quand la partie de diagnostic a diagnostiqué qu'une anomalie s'est produite dans la première partie de surveillance de température ou la seconde partie de surveillance de température.
